# EUROPEAN PATENT SPECIFICATION

(11) **EP 2 286 967 B1**
(45) Date of publication and mention of the grant of the patent: **27.06.2012**
(21) Application number: 09754851.5
(22) Date of filing: 26.05.2009
(51) Int. Cl.: B26D 1/00, B27L 5/06, B23K 20/04

(54) **FLAT CUTTING TOOL**
FLACHES SCHNEIDEWERKZEUG
OUTIL DE DÉCOUPE PLAT

(30) Priority: 27.05.2008 JP 2008138480
(43) Date of publication of application: 23.02.2011
(73) Proprietor: Kanefusa Kabushiki Kaisha, Niwa-gun Aichi 480-0192 (JP)
(72) Inventor: MIYAZAKI Toshimasa, Niwa-gun Aichi 480-0192 (JP); ISHIDA Nobuyuki, Niwa-gun Aichi 480-0192 (JP); WATANABE Hisayasu, Niwa-gun Aichi 480-0192 (JP)
(74) Representative: Kuhnen & Wacker
(86) International application number: PCT/JP2009/059942
(87) International publication number: WO 2009/145343

(56) References cited:
- JP-A- 2 104 432
- JP-A- 6 190 797
- JP-A- 11 300 688

## Description

### Technical Field

The present invention relates to a flat cutting tool used in a paper cutter for cutting layered paper or a processing machinery for cutting or chipping lumber or plastic, and in particular, to a flat cutting tool including a blade member having a cutting edge made of a high-speed tool steel.

### Background Art

For this kind of flat cutting tool, it is necessary to use expensive steel products, such as a high-speed tool steel with a high degree of hardness, which contain more rare metal such as tungsten and molybdenum at the blade edge in order to improve a cutting performance. The manufacturing cost of such a flat cutting tool, however, is very high because the whole cutting tool is formed of expensive high-speed tool steels. In addition, a significant rise in prices associated with the recent decrease of rare metal resources has led to an increase in price of this kind of flat cutting tool. To solve the above problem, there is a known cutting tool, as described in Japanese Patent Application Laid-Open No. 2-104432, for example, in which a major blade portion (base member) and a blade edge portion (blade member) are superposed and joined to form a cutting tool, and the major blade portion is formed of an inexpensive steel material and the blade edge portion is formed of an expensive tool steel and the like. In this cutting tool, a cutting edge is provided at an end portion of the blade edge, which is formed by joining the blade member made of an expensive steel material to the base member made of an inexpensive steel material and grinding an end portion of the superposed both members from the base member side to form an inclined face (beveled face), as described in Japanese Patent Application Laid-Open No. 2005-313 268, for example.

When the rigidity of a blade member for a paper cutter is taken into account, a material having a thickness exceeding a predetermined thickness is required for the blade member. Specifically, if the thickness of the blade member is too small, its rigidity is reduced. As a result, the blade member deforms when the cutting tool is used, and the accuracy of cutting processing is lowered. A conventional cutting blade made of a high-speed tool steel, for example, needs a blade member made of a high-speed tool steel having a thickness of approximately 3 to 5 mm. Therefore, even if a blade member and a base member are separately made of different materials as described above, the blade member containing more rare metal becomes expensive and the cost of the cutting tool cannot be reduced sufficiently. In addition, a blade member made of a high-speed tool steel presents a hardness increased by quenching and a superior resistance to abrasion, but when a cutting edge is formed by grinding an inclined face of the blade member, a grinding performance is deteriorated because of its high hardness, resulting in a difficulty in grinding work.

An object of the present invention is to solve the above problems and provide a flat cutting tool in which a blade member is made of a reduced amount of expensive materials while the rigidity thereof is maintained to reduce the cost and having a good grinding performance.

### Disclosure of the Invention

To achieve the foregoing object, a flat cutting tool of the present invention has a blade member which is made of a rolled steel plate, in which a surface layer, a middle layer and a lower layer are rolled in layers, and which has a cutting edge formed on the surface layer, wherein the surface layer is a high-speed tool steel with a high degree of hardness, the middle layer is an alloy steel having a lower quench-hardenability than the high-speed tool steel, and the lower layer is a steel having little quench-hardenability.

The surface layer is made of a high-speed tool steel, and its thickness is preferably 0.1 mm or more. If the thickness is less than 0.1 mm, it becomes difficult to control unevenness in thickness of the surface layer at the time of finishing a flat cutting tool. As a result, the cutting properties such as rigidity and abrasion resistance of the cutting tool are noticeably affected. Even if the thickness is 0.1 mm or more, the cutting properties are unchanged. An increase in thickness causes a rise in material costs. The middle layer is an alloy steel that has a lower quench-hardenability than a high-speed tool steel but exhibits approximately HRC 58 (Rockwell Hardness C scale) or higher, and more preferably, HRC 60 or higher under the quenching and tempering conditions of a high-speed tool steel. Tool steel, bearing steel or impact-resistant steel, for example, is adopted for the middle layer. If the hardness of the middle layer next to the surface layer is too low, the rigidity is reduced. Therefore, the force acting on the surface layer at the time of cutting or chipping cannot be sufficiently supported, and the cutting tool becomes easily deformed. Alloy steel means a steel that contains one or more alloying elements selected from Al, B, Co, Cr, Cu, La, Mo, Nb, Ni, Pb, Se, Te, Ti, V, W and Zr by a predetermined lower limit quantity or more, as defined in the ISO (International Organization for Standardization) standards. A high-speed tool steel is one of alloy steels, but an alloy steel forming a middle layer of the present invention includes a low quench-hardenability, but not a high-speed tool steel with a high quench-hardenability.

The thickness of the middle layer is preferably 2.5 to 3.5 mm. The middle layer functions so as to resist deflection of the blade edge portion caused by a cutting reaction force acting on the cutting edge when paper is cut. If the thickness is less than 2.5 mm, the strength with which the cutting edge is supported is not sufficient, and as a result, the thickness of the surface layer needs to be increased. If the thickness is 3.5 mm or more, the blade member becomes too thick. In addition, the middle layer needs to have a certain degree of quench-hardenability, although it does not need to have such a high quench-hardenability that the surface layer has. If the middle layer is hardly hardened by heat treatment, the thickness of the surface layer must be about the same as that of a conventional surface layer. Therefore, the middle layer needs to have almost the same degree of quench-hardenability as that of tool steel, bearing steel or impact-resistant tool steel.

The lower layer is any steel other than an alloy steel, which has little quench-hardenability. Especially, use of a mild steel has an effect of preventing warping of the blade member after heat treatment and facilitates correction of distortion such a warpage. For example, if the blade member is composed of a high-speed tool steel and an alloy steel in two layers without a mild steel layer, warping of a blade member after heat treatment becomes too large to be corrected. The resultant member cannot be used as a blade member. It is preferable that the thickness of the lower layer is 0.5 to 1.0 mm. If it is less than 0.5 mm, it becomes difficult to obtain the effect of preventing warping of a blade member after heat treatment. If it is more than 1.0 mm, the blade member becomes too thick. The above respective thicknesses of the layers are for a cutting tool for a paper cutter. A planer blade has a smaller size of cutting blade compared to a cutting tool for a paper cutter, and the respective thicknesses of layers in a planer blade is relatively smaller than the above thicknesses.

In the present invention of the above-described configuration, a blade member is formed by a plurality of steel plate layers, and only the steel plate of the surface layer is an expensive high-speed tool steel. Therefore, use of expensive materials such as a high-speed tool steel can be reduced while the rigidity of the cutting tool is maintained. In addition, the manufacturing cost of the flat cutting tool is significantly reduced and an effective utilization of rare metal resources is promoted. Additionally, in the present invention, since the blade member is treated by heat, some warping occurs on the blade member after heat treatment. The lower layer, however, is not hardened, and therefore, warping can be easily corrected by a press or the like, and fine deformation that persists can be removed by minimum grinding of at least one of the surface layer and the lower layer. Further, in the present invention, a high-speed tool steel with a high degree of hardness is made relatively thin. Therefore, the workability of grinding is improved at the time of grinding of the inclined face for formation of a cutting edge.

In addition, in the present invention, the middle layer may consist of a plurality of steel plates in layers and at least a layer adjacent to the surface layer may be formed of the alloy steel. The middle layer is formed of only alloy steels or a combination of alloy steels and mild steels. Thus, even if the middle layer consists of a plurality of layers with a layer adjacent to the surface layer being formed of an alloy steel, it can fulfill the functions thereof.

Further, in the present invention, it is preferable that the cutting edge is formed on the surface layer after the surface layer is hardened to a hardness suitable for the cutting tool by quenching and tempering heat treatment of the blade member. This allows a cutting edge to be formed on the surface layer hardened to a hardness suitable for the cutting tool. As a result, the cutting edge is formed with a high degree of precision and stability.

In the present invention, it is also preferable that after the surface layer is hardened to a hardness suitable for the cutting tool by quenching and tempering heat treatment of the blade member, and then at least the lower layer side of the blade member is joined to a separate base member using a brazing filler metal or an adhesive agent, the cutting edge is formed on the surface layer. This allows a cutting edge to be formed on the surface layer with the blade member hardened to a hardness suitable for the cutting tool being joined to the base member. As a result, the cutting edge is formed with a higher degree of precision and stability.

### Brief Description of Drawings

Fig. 1 is a front view illustrating a flat cutting tool according to one embodiment of the present invention.
Fig. 2 is a side view illustrating the flat cutting tool.
Fig. 3 is a front view illustrating a blade member composing the flat cutting tool.
Fig. 4 is a side view illustrating the blade member.
Fig. 5 is a front view illustrating a base member composing the flat cutting tool.
Fig. 6 is a side view illustrating the base member.
Fig. 7 is a side view illustrating a state in which the blade member is fixed to the base member.
Fig. 8 is a front view illustrating a planer blade for a planing machine of another embodiment.
Fig. 9 is a side view illustrating a planer blade for the planing machine.

### Best Mode for Carrying Out the Invention

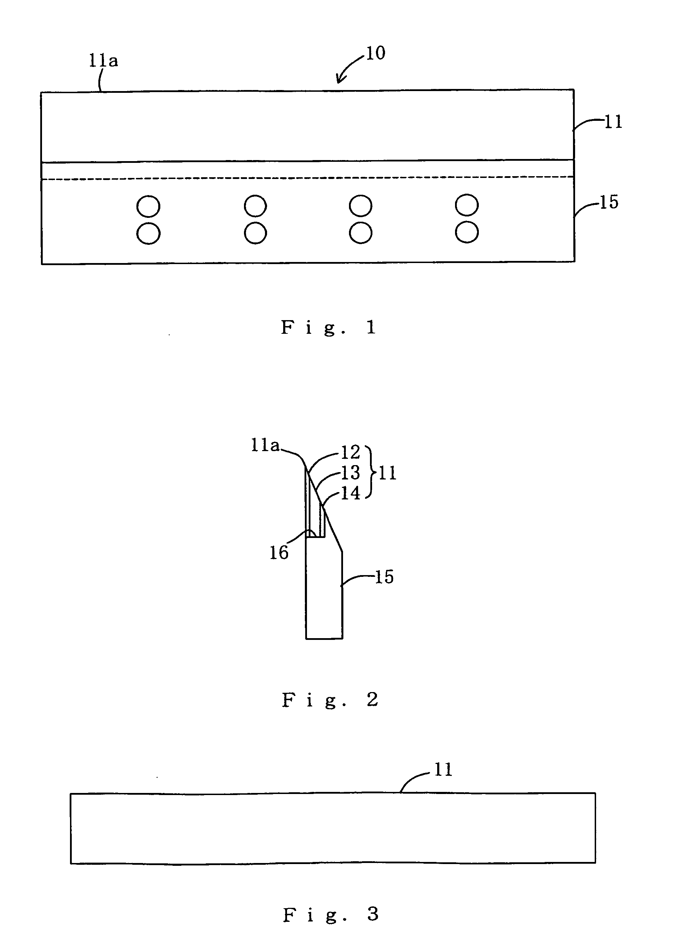

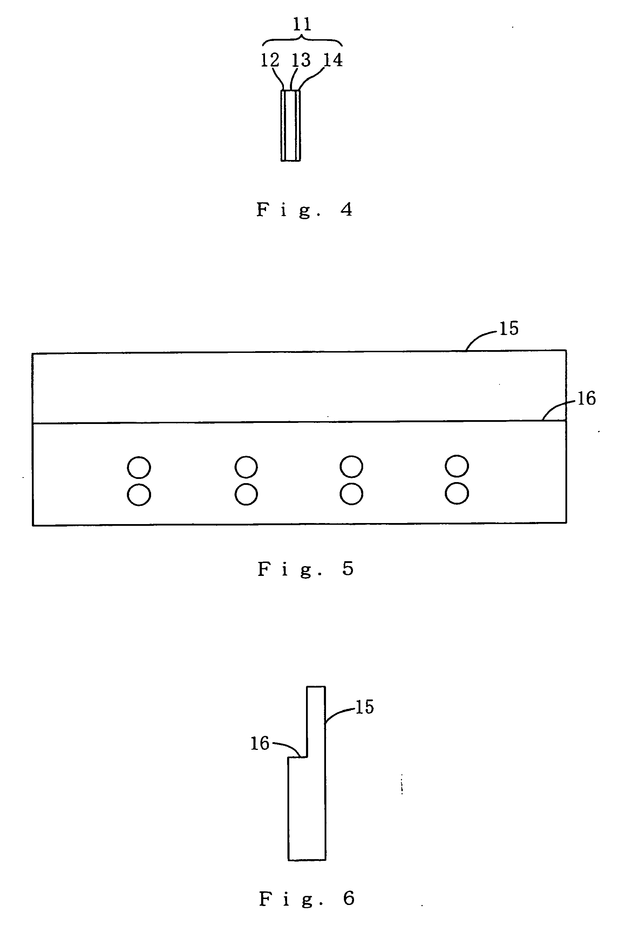

Hereinafter, one embodiment of the present invention will be described with reference to the drawings. Figs. 1 and 2 are a front view and a side view of a flat cutting tool used as a cutter blade for cutting superposed sheets of paper in bookbinding according to the embodiment. Figs. 3 and 4 are a front view and a side view of a blade member, and Figs.5 and 6 are a front view and a side view of a base member. The flat cutting tool 10 is formed by fixing a blade member 11 which is a rolled steel plate to a mounting concavity 16 of a base member 15 which is a thick plate made of an ordinary steel, using a brazing filler metal or an adhesive agent, to form a cutting edge 11a on the surface layer 12 side of the blade member 11.

The blade member 11 is a thin rolled steel plate having a long rectangle shape which is formed by joining a surface layer 12 of a high-speed tool steel with a high degree of hardness, a middle layer 13 of an alloy steel which has a lower quench-hardenability than the high-speed tool steel and a lower layer 14 of a mild steel having little quench-hardenability. Specifically, the surface layer 12 is 4 mm thick, the middle layer 13 is 12 mm thick and the lower layer 14 is 10 mm thick. The thickness of the blade member 11 becomes 26 mm. The blade member 11 is formed by the forge welding method in which the steel materials for the surface layer 12, the middle layer 13 and the lower layer 14 are superposed and crimped in a high temperature heating state, and joints which continuously connect between layers are formed. The blade member 11 is normalized and annealed as needed to correct deformation. After that, it is quenched and tempered, so that the surface layer 12 is hardened to a hardness suitable for the cutting tool. The thickness of the blade member 11 after forge welding becomes 6 mm. Some deformation is caused by heat treatment of the blade member 11, but warping can be easily corrected by a press or the like, and fine deformation that persists can be removed by minimum grinding of at least one of the lower layer 14 and the surface layer 12. The thickness of the finished blade member 11 becomes 5 mm.

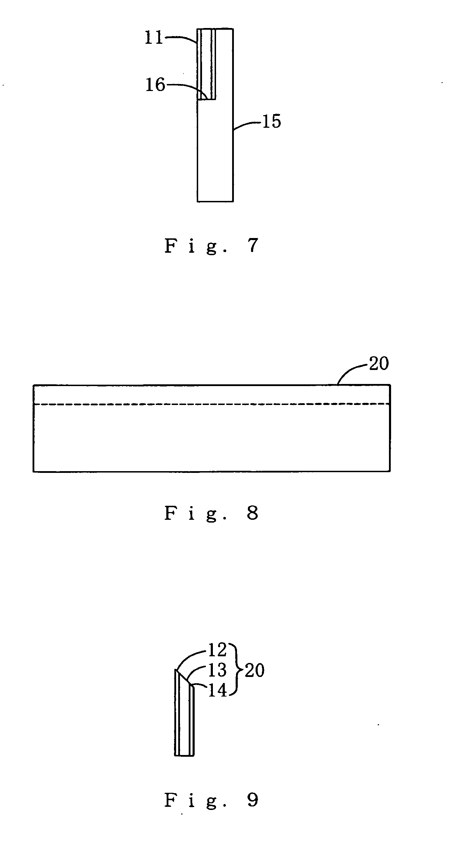

The base member 15 is a thick plate having a long rectangle shape made of an ordinary steel, as shown in Figs. 5 and 6. On one longitudinal edge side on the front (upper edge side in Fig. 5), it has a mounting concavity 16 having a substantially same shape as the blade member 11, which extends in a longitudinal direction between both ends and is formed by half cutting out the base member 15 in a direction of thickness. After warping at heat treatment is removed from the blade member 11, the lower layer 14 is fixed to the mounting concavity 16 of the base member 15 using a brazing filler metal or an adhesive agent, so that the blade member 11 is fixed to the base member 15, as shown in Fig. 7. Then, at the side on the base member 15 to which the blade member 11 is fixed, grinding is applied from the backside (right side in Fig. 7), so that an inclined face with a tip angle of about 20 degrees is formed on the surface layer 12 side. As a result, a flat cutting tool 10 having a cutting edge 11a provided on the surface layer 12 is obtained.

In the embodiment having the above configuration, the blade member 11 is formed by joining three layers of steel plate, and only the surface layer 12 is made of an expensive high-speed tool steel. Therefore, use of expensive high-speed tool steels is reduced while the rigidity of the blade member 11 is maintained. As a result, the whole manufacturing cost of the flat cutting tool 10 is significantly reduced, and an effective use of rare metal resources is promoted. Additionally, in this embodiment, the surface layer 12 with high hardness is made relatively thin at the time of grinding of the inclined face for formation of a cutting edge 11a. Therefore, the workability of grinding is improved. Since the blade member 11 is treated by heat, slight warping occurs on the blade member 11 after heat treatment. The lower layer 14, however, is not hardened, and therefore, warping can be easily corrected by a press or the like, and fine deformation that persists can be removed by minimum grinding of at least one of the surface layer 12 and the lower layer 14.

In the above embodiment, the flat cutting tool 10 is formed by fixing the blade member 11 to the base member 15, and it is used as a cutter knife which is a thick cutting tool or as a veneer slicer knife. In the case of a cutting tool having a small thickness, B type planer blade specified in JIS B 4710, for example, a blade member itself which has a similar configuration to that of the above blade member 11 may be used as a planer blade 20 without a base member, as shown in Figs. 8 and 9. In addition, in the above embodiment, the middle layer 13 is formed of one layer of an alloy tool steel, but the middle layer may be formed in a plurality of layers. In that case, a layer on the surface layer 12 side is an alloy steel. Further, the blade member may have a coating film to improve abrasion resistance and corrosion resistance. The configuration of the flat cutting tool of the above embodiment is only one example, and various modifications can be made without departing from the scope of the invention as claimed.

### Industrial Applicability

In the present invention, a blade member is formed of a plurality of layers of steel plates and only a surface layer is made of an expensive high-speed tool steel. Therefore, use of expensive materials such as a high-speed tool steel is reduced while the rigidity of the blade member is maintained, and the whole cost of the flat cutting tool is substantially reduced. In addition, a high hardness high-speed tool steel is made relatively thin at the time of grinding of the inclined face for formation of a cutting edge. Therefore, the workability of grinding is improved to make the cutting tool useful.

## Claims

1. A flat cutting tool having a blade member (11) made of a rolled steel plate in which a surface layer(12), a middle layer (13) and a lower layer(14) are rolled in layers and which has a cutting edge (11a) formed on the surface layer (12), wherein the surface layer (12)is a high-speed tool steel with a high degree of hardness, the middle layer(13) is an alloy steel having a lower quench-hardenability than the high-speed tool steel, and the lower layer(14) is a steel having little quench-hardenability.

2. The flat cutting tool according to claim 1, wherein the middle layer(13) consists of a plurality of steel plates in layers, and at least a layer adjacent to the surface layer (12) is formed of the alloy steel.

3. The flat cutting tool according to claim 1 or 2, wherein after the surface layer (12) is hardened to a hardness suitable for the cutting tool by quenching and tempering heat treatment of the blade member (11), the cutting edge (11a) is formed on the surface layer(12).

4. The flat cutting tool according to claim 1 or 2, wherein after the surface layer (12) is hardened to a hardness suitable for the cutting tool by quenching and tempering heat treatment of the blade member (11), and then at least the lower layer (14) side of the blade member(11) is joined to a separate base member(15) using a brazing filler metal or an adhesive agent, the cutting edge (11a) is formed on the surface layer.

## Patentansprüche

1. Flaches Schneidwerkzeug mit einem Klingenelement (11), das aus seiner Walzstahlplatte besteht, in der eine Oberflächenschicht (12), eine mittlere Schicht (13) und einen untere Schicht (14) in Schichten gewalzt sind, und das eine Schneidkante (11a) aufweist, die auf der Oberflächenschicht (12) gebildet ist, wobei die Oberflächenschicht (12) ein Hochgeschwindigkeits-Werkzeugstahl mit einem hohen Härtegrad ist, wobei die mittlere Schicht (13) ein Legierungsstahl mit einer geringeren Abschreckhärtbarkeit als der Hochgeschwindigkeits-Werkzeugstahl ist, und die untere Schicht (14) ein Stahl mit einer geringen Abschreckhärtbarkeit ist.

2. Flaches Schneidwerkzeug nach Anspruch 1, wobei die mittlere Schicht (13) aus einer Mehrzahl von Stahlplatten in Schichten besteht, und zumindest eine Schicht neben der Oberflächenschicht (12) aus dem Legierungsstahl gebildet ist.

3. Flaches Schneidwerkzeug nach Anspruch 1 oder 2, wobei, nachdem die Oberflächenschicht (12) auf eine für das Schneidwerkzeug geeignete Härte durch eine Abschreckungs- und Anlass-Wärmebehandlung des Klingenelements (11) gehärtet worden ist, die Schneidkante (11a) auf der Oberflächenschicht (12) gebildet wird.

4. Flaches Schneidwerkzeug nach Anspruch 1 oder 2, wobei, nachdem die Oberflächenschicht (12) auf eine für das Schneidwerkzeug geeignete Härte durch eine Abschreckungs- und Anlass-Wärmebehandlung des Klingenelements (11) gehärtet worden ist, und dann zumindest die Seite der unteren Schicht (14) des Klingenelements (11) mit einem gesonderten Basiselement (15) unter Verwendung eines Lötfüllmaterial oder eines Klebstoffs zusammengefügt worden ist, die Schneidkante (11a) auf der Oberflächenschicht gebildet wird.

## Revendications

1. Outil de découpe plat comportant un organe de lame (11) constitué d'une plaque de fer laminé dans laquelle une couche de surface (12), une couche médiane (13) et une couche inférieure (14) sont laminées en couches et qui comporte un bord de découpe (11a) formé sur la couche de surface (12), dans lequel la couche de surface (12) est un acier à outil à découpe rapide avec un degré de dureté élevé, la couche médiane (13) est un acier allié ayant une capacité de durcissement par trempe inférieure à celle de l'acier à outil à découpe rapide, et la couche inférieure (14) est un acier ayant une faible capacité de durcissement par trempe.

2. Outil de découpe plat selon la revendication 1, dans lequel la couche médiane (13) est constituée d'une pluralité de plaques en acier en couches, et au moins une couche adjacente à la couche de surface (12) est formée de l'acier allié.

3. Outil de découpe plat selon la revendication 1 ou 2, dans lequel, après que la couche de surface (12) est durcie jusqu'à une dureté appropriée pour l'outil de découpe par traitement thermique de revenu et de trempe de l'organe de lame (11), le bord de découpe (11a) est formé sur la couche de surface (12).

4. Outil de découpe plat selon la revendication 1 ou 2, dans lequel, après que la couche de surface (12) est durcie jusqu'à une dureté appropriée pour l'outil de découpe par traitement thermique de revenu et de trempe de l'organe de lame (11), puis qu'au moins le côté de la couche inférieure (14) de l'organe de lame (11) est joint à un organe de base séparé (15) à l'aide d'un métal d'apport pour brasage ou d'un agent adhésif, le bord de découpe (11a) est formé sur la couche de surface.
